# EUROPEAN PATENT APPLICATION

(11) **EP 3 846 097 A1**
(43) Date of publication of application: **07.07.2021**
(21) Application number: 19855326.5
(22) Date of filing: 21.08.2019
(51) Int. Cl.: G06Q 10/06, G06Q 50/26, G06Q 10/10, G06Q 30/02

(54) **SYSTEM FOR CREATING EMPLOYMENT THROUGH WORKING TYPE CONFIGURED BY COLLECTION OF COLLECTIVE INTELLIGENCE, AND METHOD THEREFOR**

(30) Priority: 28.08.2018 KR 20180101278
(71) Applicant: Yoon, Seong Min, Guri-si, Gyeonggi-do 11952 (KR)
(72) Inventor: Yoon, Seong Min, Guri-si, Gyeonggi-do 11952 (KR)
(74) Representative: Verriest, Philippe
(86) International application number: PCT/KR2019/010611
(87) International publication number: WO 2020/045884

(57) **Abstract**

The present invention relates to a system and a method of creating employment through a work type established by collective intelligence convergence. The present invention discloses a system and a method of creating employment through a work type of a general office work established by collective intelligence convergence; the system including: an operating computer which makes an adjustment for creating employment in relation to a four-team two-shift work type of a company; a collective intelligence converging system which converges collective intelligence for an opinion collection item of introduction of the four-team two-shift work type and an opinion collection item of an employment expansion rate by a request of the operating computer, and provides the operating computer with a converged opinion and a numerical value related to the converged opinion; and a numerical value determining system which reevaluates and adjusts unreasonable cost of the company by the request of the operating computer, in which the operating computer is operated to improve productivity of the company while increasing employment by increasing daily operating hours of the company compared to an existing work type through a work type that distributes workforce by operating the work in two shifts or a work type that distributes workforce into a weekday team (Monday, Tuesday, Wednesday, and Thursday) and a weekend team (Friday, Saturday, and Sunday) in the introduction of the four-team two-shift work type of the company.

## Description

### [Technical Field]

The present invention relates to a system and a method of creating employment through a work type established by collective intelligence convergence. More particularly, the present invention relates to a system and a method of creating employment through a work type established by collective intelligence convergence, which select a four-team two-shift method as a work type in a company and the like and establish the four-team two-shift work type through collective intelligence convergence for maximizing efficiency of the four-team two-shift method, thereby expanding employment in companies, and the like, improving productivity, and improving profits through cost reduction in the company.

### [Background Art]

The recent hot topic is job, namely employment creation. Among the methods, research has been actively conducted to create employment through improvement of the work type of companies.

Work-sharing, that is an existing system, is a system designed to prevent unemployment, such as recession, by reducing working hours and keeping other workers in the jobs for the reduced amount of time, and a representative example thereof is Volkswagen's job sharing in Germany in 1994. Work-sharing is a method of sharing jobs by reducing working hours by about 20% from 36 hours a week to 28 hours a week, and also reducing incomes of workers by about 16% by introducing a four-days-a-week system as the concept of reducing working hours without wage preservation to contribute to preventing dismissal of workers. Further, in Germany, and the like, the "working hour account system" was implemented to flexibly adjust a production volume according to fluctuations in demand, and is the method of granting vacation or shortening working hours while guaranteeing existing wages when work is free, and filling in lost working hours when there is a lot of work to do additional work. However, although the method may contribute to the prevention of dismissal, there is a limit to create additional new employment, and when the method is actually operated in Germany, for insufficient working hours exceeding a certain amount of time (for example, 16 hours), the corresponding portion is deducted from wages during quarterly settlement, but surplus working hours exceeding a certain amount of time are automatically extinguished without additional monetary reward, so that the method is disadvantageous operated for workers.

Currently, in companies, a four-team two-shift method is known as an ideal system for shift work, and the company, such as Yuhan Kimberly, actually have adopted and implemented the four-team two-shift work type. However, in reality, the four-team two-shift system is only operated for factories that must operate 24 hours and special industries, and is not applicable to general office workers. Further, it is known that the currently operated four-team two-shift work has a fatal drawback in that due to the 24 hours operation, workers in the night or early hours are forced to work during sleeping hours, which breaks the physical rhythms of workers and adversely affects workers' health.

Although the foregoing four-team two-shift work type of a company is operated, a solution is needed to solve the disadvantages and maximize the advantages. Since the existing four-team two-shift work type is performed according to a fixed manual, there is no way to find and utilize the advantages. In order to maximize the advantage of the four-team two-shift work type, everyone should participate and present opinions, the opinions should be converged, and the individuality of the four-team two-shift work type needs to be pursued.

As the invention in which anyone participates and presents opinions and the opinions are converged to be applied to specific subjects, the invention of the collective intelligence converging system and method of Korean Patent No. 10-1804960 (registration date: November 29, 2017) of the present applicant is granted as a patent.

The patent is the invention including: an expert opinion management means for receiving and storing expert opinion data, such as the agreement or disagreement opinion transmitted by at least one participating expert on a proposed agenda, and at least one reason and explanation for the opinion; a background knowledge management means for providing at least one expert opinions data received by the expert opinion management means to participants and dividing at least one essential reading opinion data and at least one optional reading opinion data based on agreement and disagreement data, and assigned score data to the expert opinion data and storing the divided data as background knowledge data on the agenda; a participant data management means for providing the participants with the background knowledge data stored in the background knowledge management means, receiving participant opinion data including agreement or disagreement data to the essential reading opinion data and the optional reading opinion data which are input by the participants after reading the background knowledge data, and the assigned score data, and processing the participant opinion data as collective intelligence converged data; and an expert opinion ranking management means for determining a ranking based on the participant opinion data stored in the participant data management means, updating the essential reading opinion data and the optional reading opinion data based on the ranking, and providing the updated data to the background knowledge managing unit, in which the collective intelligence converged data is formed by setting each of the essential reading opinion data and the optional reading opinion data of the agreement and disagreement opinions for the expert opinion data of the agreement or disagreement opinion on the agenda to a predetermined number and providing the participant with the predetermined number of data, displaying information on the agreement, the disagreement, and the score for the essential reading opinion data and the optional reading opinion data for the agreement opinion and the disagreement opinion input by each of the participants, and calculating an average value of the scores of the essential reading opinion data and the optional reading opinion data of each participant.

In order to solve the problem and maximize the advantages of the existing four-team two-shift work type, there are needs for an invention in which out of 24 hours a day, the remaining hours (up to 18 hours) excluding the minimum time required for sleep of human (about 6 hours) are operated in two shifts to distribute workforce, or distribute workforce between weekdays (Monday, Tuesday, Wednesday, and Thursday) and weekends (Friday, Saturday, and Sunday), but daily operating time of a company is increased by 1.5 to 2 times of the existing work type, thereby increasing employment and simultaneously improving productivity of a company, an invention in which the introduction and the particular method of the four-team two-shift work type, determination on an employment expansion rate, and the like are not uniformly determined, but are freely determined by each company by utilizing the collective intelligence converging system, and an invention in which the existing opinion converging system by collective intelligence is upgraded by one level in relation to the most important employment expansion ratio determination to converge a specific numerical value as a final converged opinion of the collective intelligence.

### [Disclosure]

### [Technical Problem]

The present invention is conceived to solve the problems of the related art, and an object of the present invention provides a system and a method of creating employment through a work type established by collective intelligence convergence, in which out of 24 hours a day, the remaining hours (up to 18 hours) excluding the minimum time required for sleep of human (about 6 hours) are operated in two shifts to distribute workforce, or distribute workforce between weekdays (Monday, Tuesday, Wednesday, and Thursday) and weekends (Friday, Saturday, and Sunday), but daily operating time of a company is increased by 1.5 to 2 times of the existing work type, thereby increasing employment and simultaneously improving productivity of a company.

Another object of the present invention provides a system and a method of creating employment through a work type established by collective intelligence convergence, in which introduction and a particular method of a four-team two-shift work type, determination on an employment expansion rate, and the like are not uniformly determined, but are freely determined by each company by utilizing the collective intelligence converging system.

Another object of the present invention provides a system and a method of creating employment through a work type established by collective intelligence convergence, in which the existing opinion converging system by collective intelligence is upgraded by one level in relation to most important employment expansion ratio determination to converge a specific numerical value to power of the collective intelligence.

### [Technical Solution]

As a technical solution for achieving the technical object of the present invention, a first aspect of the present invention presents a system for creating employment through a work type established by collective intelligence convergence including: an opinion convergence information managing unit which sets an opinion collection item related to the four-team two-shift work type and manages the converged opinion by using the collective intelligence converging system; a team organization information managing unit which sets a ratio of morning and afternoon teams and a ratio of weekday and weekend teams of the employees of the four-team two-shift work type, and adjusts the ratio of the weekday and morning team step by step in consideration of the fact that a ratio of a weekday and morning team is high and a ratio of a weekend team is low at the beginning of the introduction; a transitional period information managing unit which sets and manages the number of input employees in a two-team two-shift work type in a transitional period in consideration of a company's situation where it is difficult to immediately introduce the initial four-team two-shift work type although the necessity of shift work is recognized; a company cost information managing unit which manages cost information of the company reduced when factors, such as an increase in a production volume and a remaining work space, occur due to the introduction of the four-team two-shift work type; an employment creation information managing unit which manages an employment expansion rate and the like including employee information, which is increased by optimizing the four-team two-shift work type by using the collective intelligence converging system, by using the numerical value determining system; and a result analysis information managing unit which analyzes and manages a result of the employment creation and company's cost reduction occurring when the four-team two-shift work type is optimized by using the collective intelligence converging system.

A second aspect of the present invention presents a method of creating employment through a work type established by collective intelligence convergence including: transmitting, by an operating computer, an agenda related to introduction of a four-team two-shift work type to a collective intelligence converging system and requesting an opinion of collective intelligence; providing, by the collective intelligence converging system, participants with background knowledge related to the agenda, collecting numerical value data together with opinion about agreement and disagreement about the introduction of the four-team two-shift work type, and providing the operating computer with the collected opinion and data; optimizing, by the operating computer, a team organization of employees to be input of the four-team two-shift work type based on the numerical value data transmitted from the collective intelligence converging system; calculating and managing, by the operating computer, information about a material cost reduction factor due to an increase in a production volume of a company and a sales management cost reduction factor due to a remaining working space in a specific time zone according to the optimized four-team two-shift work type; transmitting, by the operating computer, an agenda related to employment expansion according to the introduction of the four-team two-shift work type to the collective intelligence converging system and requesting an opinion of collective intelligence; providing, by the collective intelligence converging system, the participants with background knowledge related to the agenda of the employment expansion, collecting numerical value data together with an opinion on employment expansion (agreement) and employment reduction (disagreement) according to the introduction of the four-team two-shift work type, and providing the operating computer with the collected opinion and numerical value data; and calculating and storing, by the operating computer, result information of an employment increase rate, an optimized rate of a weekday and morning team, daily operating hours of the weekday and morning team, a work start time of the weekday and morning team, and a work start day of the weekday and morning team, based on the introduction of the four-team two-shift work type and the optimized data.

The operating computer may adjust the number of employees to be input of a work team most preferred by workers step by step in order to equally set the number of employees to be input in each group.

### [Advantageous Effects]

According to the present invention, out of 24 hours a day, the remaining hours (up to 18 hours) excluding the minimum time required for sleep of human (about 6 hours) are operated in two shifts to distribute workforce, or distribute workforce between a weekday (Monday, Tuesday, Wednesday, and Thursday) team and a weekend (Friday, Saturday, and Sunday) team, but daily operating time of a company is increased by 1.5 to 2 times of the existing work type, thereby increasing employment and simultaneously improving productivity of a company, introduction and a particular method of a four-team two-shift work type, determination on an employment expansion rate, and the like are not uniformly determined, but may be freely determined by each company by utilizing the collective intelligence converging system, and it is possible to determine the most important employment expansion rate by upgrading the existing opinion converging system by collective intelligence by one level and converging a specific numerical value as a finally converged opinion of collective intelligence.

### [Description of the Drawings]

FIG. 1 is a schematic diagram illustrating an exemplary embodiment of a system for creating employment through a work type established by collective intelligence convergence of the present invention.
FIG. 2 is a schematic diagram illustrating an exemplary embodiment of an operating computer that is a main part in the exemplary embodiment of the system for creating employment through the work type established by collective intelligence convergence of the present invention.
FIG. 3 is a schematic diagram illustrating an exemplary embodiment of a collective intelligence converging system that is a main part in the exemplary embodiment of the system for creating employment through the work type established by collective intelligence convergence of the present invention.
FIG. 4 is a schematic diagram illustrating an exemplary embodiment of a management computer that is a main part in the collective intelligence converging system used in the exemplary embodiment of the system for creating employment through the work type established by collective intelligence convergence of the present invention.
FIG. 5 is a schematic diagram illustrating an exemplary embodiment of a numerical value determining system that is a main part in the exemplary embodiment of the system for creating employment through the work type established by collective intelligence convergence of the present invention.
FIG. 6 is a diagram illustrating an example for describing analysis information of an existing work type of a company and a four-team two-shift work type.
FIG. 7 is a diagram illustrating an example for describing calculation of working hours for a specific work team in the four-team two-shift work type of a company.
FIG. 8 is a diagram illustrating an example for describing collective intelligence convergence for introducing the four-team two-shift work type in the exemplary embodiment of the system for creating employment through the work type established by collective intelligence convergence of the present invention.
FIG. 9 is a diagram illustrating an example for describing collective intelligence convergence for determining an employment expansion rate according to the introduction of the four-team two-shift work type in the exemplary embodiment of the system for creating employment through the work type established by collective intelligence convergence of the present invention.
FIG. 10 is a diagram illustrating an example for describing an operation of setting a ratio of number of people input by group of the four-team two-shift work type of the company.
FIG. 11 is a diagram illustrating an example for describing an employment expansion according to the result of the application of opinion convergence of the collective intelligence converging system in the four-team two-shift work type of the present invention.
FIG. 12 is a diagram illustrating an example for describing a reward system for a participant contributing to determining a final numerical value of the employment expansion ratio according to the result of the application of opinion convergence of the collective intelligence converging system in the four-team two-shift work type of the present invention.
FIG. 13 is a diagram illustrating an example for describing adjustment of a work type of a manager among the means for supplementing problems generated in a company when the employment is expanded according to a result of the opinion convergence of the collective intelligence converging system in the four-team two-shift work type.
FIG. 14 is a diagram illustrating an example for describing an exemplary embodiment of the two-team two-shift work type in a transition period prior to the adoption of the four-team two-shift work type.
FIG. 15 is a diagram illustrating an example for describing a numerical value determining system as a supplementing means for preventing cost increase of a company when the employment is expanded through adoption and optimization of the four-team two-shift work type.
FIG. 16 is a diagram illustrating an example for describing an exemplary embodiment of a basic reward of the numerical value determining system of the present invention.
FIG. 17 is a diagram illustrating an example for describing an exemplary embodiment of a performance reward of the numerical value determining system of the present invention.
FIG. 18 is a flowchart illustrating an exemplary embodiment of a method of creating employment through a work type established by collective intelligence convergence of the present invention.

### [Mode for Invention]

Hereinafter, an exemplary embodiment of the present invention will be described in detail with reference to the accompanying drawings.

For convenience of description of the exemplary embodiment of the present invention, among terms used in the description of the exemplary embodiment of the present invention, the configuration of hardware itself may be referred in the configurations of the invention, and further, a configuration of a web program or a computer program executed by utilizing the hardware resource may be referred. For example, an operating computer among the configurations of the present invention may be computer hardware itself, and may be a web program or a computer program executed by utilizing a hardware source of a computer.

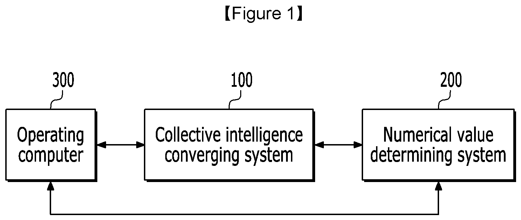

FIG. 1 is a schematic diagram illustrating an exemplary embodiment of a system for creating employment through a work type established by collective intelligence convergence of the present invention.

As illustrated in FIG. 1, the system for creating employment through a work type established by collective intelligence convergence of the present invention includes: an operating computer 100 for optimizing for creasing employment in relation to a four-team two-shift work type of a company; a collective intelligence converging system 200 for converging collective intelligence, such as introduction of the four-team two-shift work type, an employment expansion rate, and the like by a request of the operating computer 100 and providing the converged collective intelligence to the operating computer 100; and a numerical value determining system 300 for reevaluating and optimizing unreasonable cost, such as excessive wage levels compared to competitors of the company by the request of the operating computer.

In the introduction of the four-team two-shift work type of the company, the operating computer 100 is the configuration which operates, out of 24 hours a day, the remaining hours (up to 18 hours) excluding the minimum time required for sleep of human (about 6 hours) in two shifts to distribute workforce, or distribute workforce between weekdays (Monday, Tuesday, Wednesday, and Thursday) and weekends (Friday, Saturday, and Sunday), but increases daily operating time of the company by 1.5 to 2 times of the existing work type, thereby increasing employment and simultaneously improving production of the company.

The collective intelligence converging system 200 is the configuration for converging free opinion presentation of participants based on introduction of the four-team two-shift work type of the company, data for optimizing team organization when the four-team two-shift work type is introduced, and an employment expansion rate through the optimization of the four-team two-shift work type of the company, and background knowledge in relation to a reward determination of the numerical value determining system, converting the converged opinions to a numerical value, and providing the operating computer 100 and the numerical value determining system 300 with the numerical value.

The numerical value determining system 300 is the configuration which, in reevaluating various unreasonable cost, such as excessive wage levels compared to competitors of the company required in the optimizing process by the operating computer 100 which introduces and optimizes the four-team two-shift work type, provides the collective intelligence converging system 200 with an agenda and provides the operating computer 100 with optimized cost information of the company, in which the collective intelligence converging system 200 converges the opinions of the participants based on related background knowledge and provides the numerical value determining system 300 with the converged opinions.

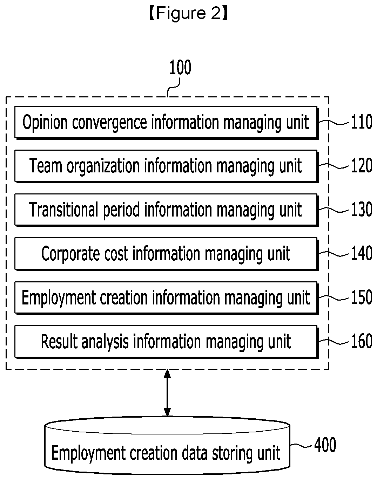

FIG. 2 is a schematic diagram illustrating an exemplary embodiment of the operating computer that is a main part in the exemplary embodiment of the system for creating employment through the work type established by collective intelligence convergence of the present invention.

As illustrated in FIG. 2, the operating computer 100 of the system for creating employment through the work type established by collective intelligence convergence is the configuration including: an opinion convergence information managing unit 110 for setting an opinion collective item related to the four-team two-shift work type and managing the converged opinion by using the collective intelligence converging system 200; a team organization information managing unit 120 for setting the ratio of participants of a morning team and participants of an afternoon team, and the ratio of participants of a weekday team and participants of a weekend team of the four-team two-shift work type and adjusting the ratios of the participants of the morning team and the weekday team step by step in consideration of the fact that the ratios of the participants of the weekday team and the morning team are high and the ratio of participants of the weekend team is low at the beginning of introduction; a transitional period information managing unit 130 for transitionally setting and managing the number of input employees in a two-team two-shift work type in consideration of the company's situation where it is difficult to immediately introduce the initial four-team two-shift work type although the necessity of shift work is recognized; a company cost information managing unit 140 for managing cost information of a company reduced when factors, such as an increase in a production volume and a remaining work space, occur due to the introduction of the four-team two-shift work type; an employment creation information managing unit 150 for managing an employment expansion rate and the like including employee information, which is increased by optimizing the four-team two-shift work type by using the collective intelligence converging system 200, by using the numerical value determining system 300; and a result analysis information managing unit 160 for analyzing and managing a result, such as employment creation and company's cost reduction, occurring when the four-team two-shift work type is optimized by using the collective intelligence converging system 200, and includes an employment creation data storing unit 400 which is included in the operating computer 100 or is connected to the operating computer 100 through a communication means and stores various contents processed in the operating computer 100.

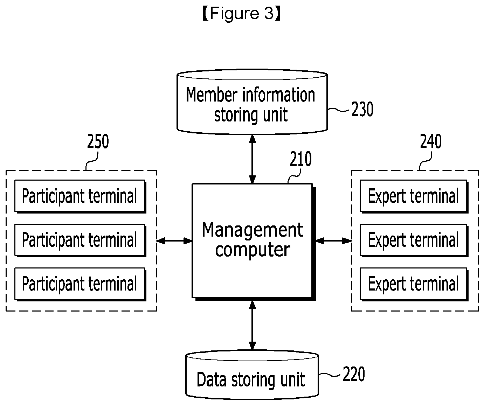

FIG. 3 is a schematic diagram illustrating an exemplary embodiment of the collective intelligence converging system that is a main part in the exemplary embodiment of the system for creating employment through the work type established by collective intelligence convergence of the present invention. As illustrated in FIG. 3, the collective intelligence converging system 200 that is the main configuration in the exemplary embodiment of the system for creating employment through the work type established by collective intelligence convergence of the present invention is the invention already published in the patent of the present applicant. The published collective intelligence converging system is the configuration presenting agreement and disagreement opinions of participants based on background knowledge and scores for the agreement and disagreement opinions, but the present invention is characterized in that in utilizing the published collective intelligence converging system in the system for creating employment through the work type established by the collective intelligence convergence of the present invention, the published collective intelligence converging system includes agreement and disagreement opinions of participants based on background knowledge and a numerical value presentable by the participant, and a range of the numerical value that may be presented for each item of the agenda is set in advance.

As illustrated in FIG. 3, the collective intelligence converging system used in the exemplary embodiment of the present invention is the configuration including: a management computer 210 for providing a terminal that participates for inducing converged data of collective intelligence for an agenda with data and collecting data; at least one expert terminal 240 which is connected to the management computer 210 through a communication means and provides expert opinion data input by experts in relation to the presented agenda; at least one participant terminal 250 which is connected to the management computer 210 through a communication means, enables the participants to read the expert opinion data of the experts in relation to the presented agenda, and provides a participant' opinion on the expert opinion; a data storing unit 220 which is included in the management computer 210 or is connected to the management computer 210 through the communication means, and stores data provided to the expert terminal 240 and the participant terminal 250 for converging collective intelligence, the expert opinion data, and the participant opinion data; and a member information storing unit 230 which is included in the management computer 210 or is connected to the management computer 210 through the communication means, and stores information on expert members and information on participant members.

The management computer 210 may include a web program or a computer program for collective intelligence convergence, and may be configured of a server computer including a communication means communicable with the expert terminal and the participant terminal.

Further, the expert terminal 240 and the participant terminal 250 may be configured of mobile communication terminals, such as a desktop computer, a notebook computer, a tablet computer, and a smart phone, which include the communication means connectable to the management computer 210 through communication, and are capable of executing a web program or a computer application program provided by the management computer 210.

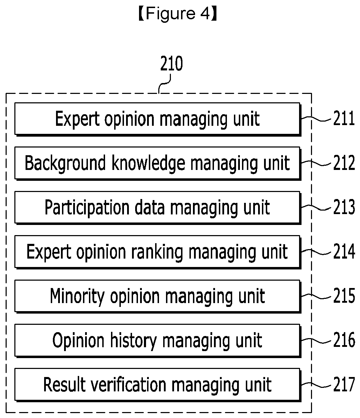

FIG. 4 is a schematic diagram illustrating an exemplary embodiment of the management computer that is a main part in the collective intelligence converging system used in the exemplary embodiment of the system for creating employment through the work type established by collective intelligence convergence of the present invention.

As illustrated in FIG. 4, the management computer 210 of the present invention includes is the configuration including: an expert opinion managing unit 211 for receiving and storing expert opinion data, such as an agreement or disagreement opinion transmitted by at least one participating expert on the presented agenda, and at least one basis and explanation for the opinion; a background knowledge managing unit 212 for providing the participants with at least one expert opinion data received by the expert opinion managing unit 211 and dividing and storing the expert opinion data into at least one essential reading opinion data and at least one optional reading opinion data for each of the agreement and disagreement opinions, and providing at least one participant with the stored essential reading opinion data and optional reading opinion data for each of the agreement and disagreement opinions as background knowledge for the agenda; a participant data managing unit 213 for receiving and storing collective intelligence data including agreement or disagreement opinion expression data input after reading the essential reading opinion data and the optional reading opinion data for each of the opinions for the agreement and the disagreement received from the background knowledge managing unit 212, and numerical value data for the essential reading opinion data and the optional reading opinion data; an expert opinion ranking managing unit 214 for determining a ranking based on the collective intelligence data stored in the participant data managing unit 213, updating the essential reading opinion data and the optional reading opinion data based on the ranking, and providing the background knowledge managing unit 212 with the updated essential reading opinion data and optional reading opinion data; a minority opinion managing unit 215 for granting a position to raise the ranking for an opinion that receives the consent of a small number of participants, but has a high score; an opinion history managing unit 216 for providing information on a source of the corresponding opinion data, a counter argument or supplementary opinion to show in detail the main text and one step before and after the main text in order to make it easier to recognize the before and after situation about a context and a situation from which the opinion came in the case where the participants have various complicated opinions in the process of reading the essential reading opinion data and the optional reading opinion data; and a result verification managing unit 217 for generating a report in a format set based on the collective intelligence data stored in the participation data managing unit 213 and providing the operating computer 100 providing the agenda with the generated report.

The operation of the exemplary embodiment of the collective intelligence converging system used in the exemplary embodiment of the system for creating employment through the work type established through collective intelligence convergence of the present invention illustrated in FIGS. 3 and 4 will be described.

The management computer 210 searches for at least one expert in a corresponding field from an expert pool in relation to the received agenda and transmits a request for presentation of opinions related to the agenda to the expert terminal 240. The experts access the management computer 210 by using the expert terminals 240 to perform expert authentication. When the management computer 210 provides the expert terminals 240 of the experts of which the expert authentication is completed with an expert opinion presentation form, the expert terminal 240 transmits expert opinion data including an agreement or disagreement opinion on the agenda and basis and explanation data of the agreement or disagreement opinion input by the experts in the opinion presentation form provided by the management computer 210 to the management computer 210. The management computer 210 stores the expert opinion data of the agreement or disagreement opinion on the agenda transmitted from the expert terminal 240. The management computer 210 exposes intention determination information related to the agenda to the participant terminals 250 of the participant members. When the participant terminal 250 accesses the management computer 210 and performs the participant authentication, the management computer 210 provides the participant terminal 250 of the participant of which the participant authentication is completed with the predetermined number of expert data related to the agenda. When the agreement and disagreement data related to the expert opinion data related to the agenda input by the participants, score data related to the agreement and disagreement data, and a separate opinion of the participant are presented, the management computer 210 transmits the participant opinion data including the separate opinion data to the management computer 210. The management computer 210 grants a ranking to the expert opinion data based on the expert opinion data transmitted from the participant terminal 250 and determines the predetermined number of high-ranking expert opinion data as the essential reading opinion data, and determines the expert opinion data that is not included in the essential reading opinion data and the separate opinion data of the participants as the optional reading opinion data, and stores the determined data as background knowledge data. The management computer 210 exposes intention determination information related to the agenda to the participant terminals 250 of the participant members. When the participant terminal 250 accesses the management computer 210 and performs the participant authentication, the management computer 210 provides the participant terminal 250 of the participant of which the participant authentication is completed with the background knowledge data related to the agenda. The management computer 210 transmits the participant opinion data including the agreement and disagreement data related to the essential reading opinion data and the optional reading opinion data related to the agenda included in the background knowledge data input by the participants and score data related to the agreement and disagreement data to the management computer 210. The management computer 210 checks whether the opinion presentation of the participant participating in the opinion presentation is ended, and when it is confirmed that the opinion presentation of the participants is not ended, the management computer 210 checks whether the rankings of the essential reading opinion data and the optional reading opinion data are changed based on the participant opinion data while continuously receiving the opinion presentation of the participants, and when it is confirmed the rankings of the essential reading opinion data and the optional reading opinion data are changed, the management computer 210 changes the essential reading opinion data and the optional reading opinion data itself or the rankings of the essential reading opinion data and the optional reading opinion data and provides the participant terminal 250 with the changed data. When it is confirmed that the opinion presentation of the participants is ended, the management computer 210 derives collective intelligence convergence data based on the received participant opinion data.

The configuration and the operation of the collective intelligence converging system used in the exemplary embodiment of the present invention are not limited thereto. It is a matter of course that various modified models included in the technical spirit of the collective intelligence converging system may be used.

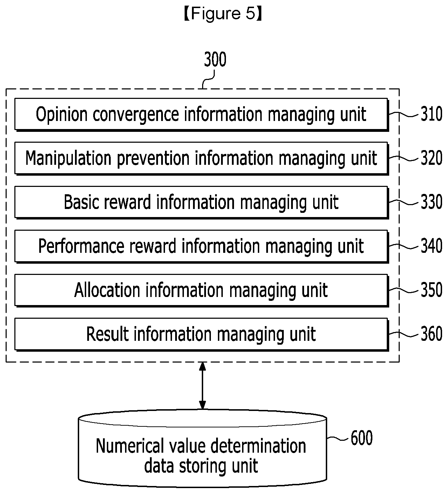

FIG. 5 is a schematic diagram illustrating an exemplary embodiment of the numerical value determining system that is a main part in the exemplary embodiment of the system for creating employment through the work type established by collective intelligence convergence of the present invention.

The numerical value determining system 300 of the present invention is the system that rewards the participant who guesses the numerical value that is to be finally determined as collective intelligence convergence and derives a final numerical value with guaranteed objectivity in determining a specific numerical value of an employment expansion rate and the like through the optimization of the four-team two-shift work type of a company in association with the collective intelligence converging system 200.

As illustrated in FIG. 5, the numerical value determining system of the present invention is the configuration including: an opinion convergence information managing unit 310 which receives numerical value determination agenda data related to the employment expansion rate from the operating computer 100, makes a request for opinion convergence to the collective intelligence converging system 200, and manages a result of the request; a manipulation prevention information managing unit 320 which includes minimum manipulation prevention value information included in the numerical value determination agenda data received from the operating computer 100 or autonomously determined minimum manipulation prevention value information in the request of the opinion convergence to the collective intelligence converging system 200 and prevents the manipulation of a convergence result value of the collective intelligence convergence opinion; a basic reward information managing unit 330 which performs a predetermined reward on a participant who guesses the final numerical value to be converged in the collective intelligence converging system 200 and managing the reward; a performance reward information managing unit 340 which performs a performance reward autonomously set and voluntarily performed by the operating computer 100 and manages a performance reward implementation rate and reliability of a client; an allocation information managing unit 350 for distributing the reward amount by each ranking to selected participants, in which the participants close to the numerical value are selected in relation to the final numerical value of the opinion convergence of the collective intelligence converging system 200; a result information managing unit 360 for providing the operating computer 100 with the finally determined numerical value; and a numerical value determination data storing unit 600 which is included in the numerical value determining system 300 or is connected to the numerical value determining system 300 through the communication means, and stores various data operated in the numerical value determining system 300.

The exemplary embodiment of the present invention will be described in more detail with reference to the accompanying drawings of FIGS. 1 to 5, and the accompanying drawings.

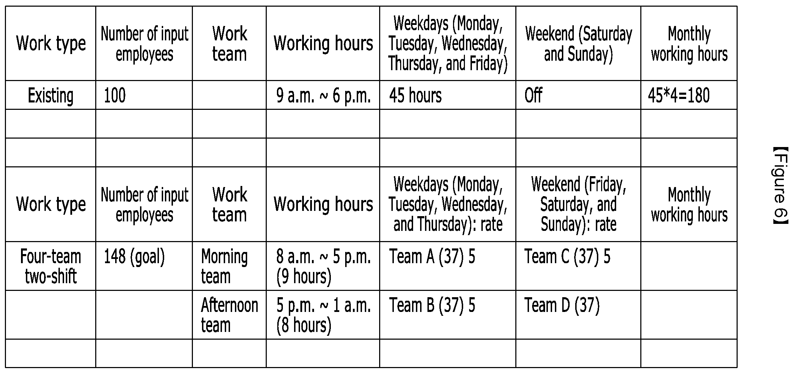

FIG. 6 is a diagram illustrating an example for describing analysis information of an existing work type of a company and the four-team two-shift work type.

As illustrated in FIG. 6, the existing work type of the company is based on 100 employees, working hours are 9 a.m. to 6 p.m. (9 hours), working days are Monday, Tuesday, Wednesday, Thursday, and Friday (weekdays) for 5 days, and weekends (Saturday and Sunday) are closed, so that the working hours per one person are calculated as 45 hours per week and 180 hours per month.

In comparison to this, in the four-team two-shift work type, the employment expansion is expected , so that the number of employees is 148 and the ratio of working input employees by team is equal (5:%), and the working is in the form in which four teams (Teams A, B, C, and D) working on weekdays (Monday, Tuesday, Wednesday, and Thursday) and weekends (Friday, Saturday, and Sunday) or working in the morning and the afternoon work in two shifts. Based on working hours in the morning team from 8 a.m. to 5 p.m. (9 hours) and working hours in the afternoon team from 5 p.m. to 1 a.m. (8 hours), 37 employees are assigned for the weekday and morning team (Team A), 37 employees are assigned for the weekday and afternoon team (Team B), 37 employees are assigned for the weekend and morning team (Team C), and 37 employees are assigned for the weekend and afternoon team (Team D).

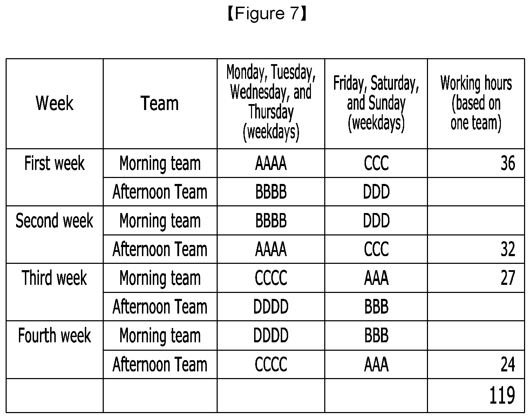

FIG. 7 is a diagram illustrating an example for describing calculation of working hours for a specific work team in the four-team two-shift work type of the company.

As illustrated in FIG. 7, in explaining based on Team A, Team A is the weekday and morning team on the first week (9 hours x 4 days = 36 hours), the weekday and afternoon team on the second week (8 hours x 4 days = 32 hours), the weekend and morning team on the third week (9 hours x 3 days = 27 hours), and the weekend and afternoon team on the fourth week (8 hours x 3 days = 24 hours), so that the working hours per month are calculated as a total of 119 hours.

That is, it can be recognized that, as compared to the existing work type, when the four-team two-shift work type is applied, the original working hours per employee is reduced.

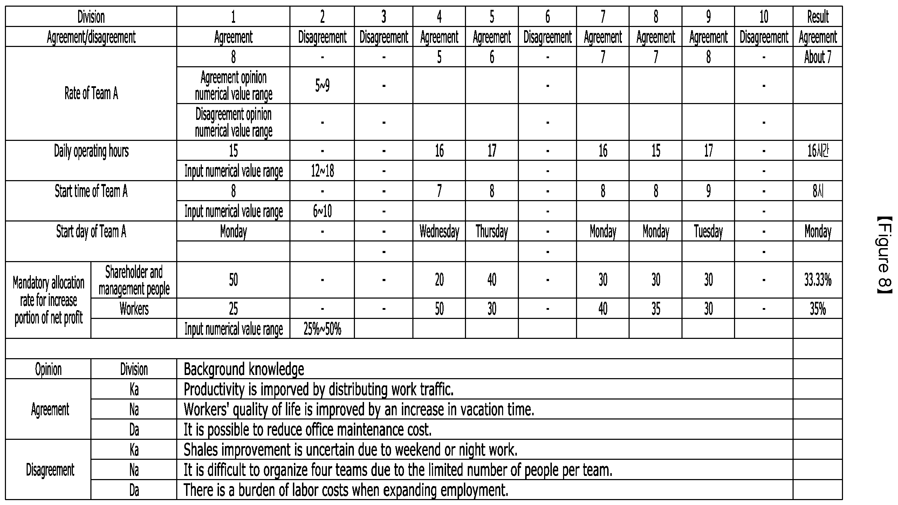

FIG. 8 is a diagram illustrating an example for describing collective intelligence convergence for introducing the four-team two-shift work type in the exemplary embodiment of the system for creating employment through the work type established by collective intelligence convergence of the present invention.

The operating computer 100 requests the collective intelligence opinion from the collective intelligence converging system 200 in order to converge the opinions of collective intelligence for the introduction of the four-team two-shift work type of a specific company. In this case, as for opinion gathering items, the agreement and disagreement opinion on the introduction of the four-team two-shift work type, the ratio of Team A among four Teams A, B, C, and D (the ratio of employees in the weekday and morning teams among the total number of employees in the company), daily operating hours, the work start time of Team A, the start day of Team A, an allocation rate for the increase portion in the case of an increase in the company's net profit (the portions for shareholders, managers, and workers), and the like may be presented.

The collective intelligence converging system 200 receiving the request for the collective intelligence opinion from the operating computer 100 derives background knowledge illustrated in FIG. 8 based on an expert's opinion with the introduction of the four-team two-shift work type as an agenda and presents the derived background knowledge to the participants who are presenters of the collective intelligence opinion. The background knowledge in the case of approving the introduction of the four-team two-shift work type may include, for example, improvement of productivity by distribution of work traffic, improvement of quality of life of workers due to an increase in vacation time, and reduction of office maintenance cost. The background knowledge in the case of disapproving the introduction of the four-team two-shift work type may include, for example, uncertainty of sales improvement due to weekend or night work, difficulty in organizing four teams due to the limited number of employees per team, and an increase in labor cost when employment is expanded.

In addition to the background knowledge of the above example, in order to secure the result of the collective intelligence as a numerical value, a numerical value range that may be presented by the participant for the opinion collection item may be set. For example, in the case of approving the introduction of the four-team two-shift work type, a numerical value range of the opinions in favor of the ratio of Team A may be set to 5 to 9, a daily operation time may be set in a numerical value range of 12 to 18 hours, a work start time of Team A may be set in a numerical value range of 6 to 10 o'clock, and a numerical value range of the mandatory allocation rate for the increase portion when the company's net profit increases with the introduction of the four-team two-shift work type may be set to 25 to 50%.

The numerical value range is one example, and the present invention is not limited thereto.

In the example of FIG. 8, the result of the collective intelligence convergence is converged to "agreement" for the introduction of the four-team two-shift work type, about 7 of the input ratio of Team A, daily operation time of 16 hours, the work start time of Team A of 8 o'clock, the start day of Team A of "Monday", the mandatory allocation rate for the increase portion when the company's net profit increases due to the introduction of the four-team two-shift work type of "33.33%" for shareholders and managers and "35%" for workers.

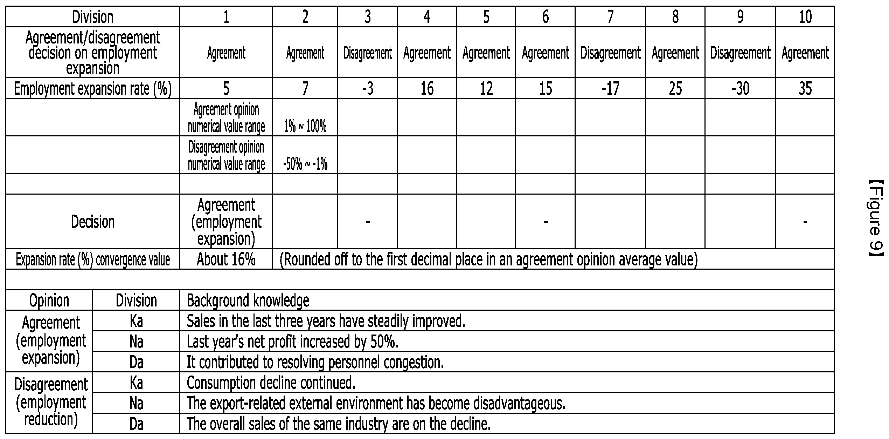

FIG. 9 is a diagram illustrating an example for describing collective intelligence convergence for determining an employment expansion rate according to the introduction of the four-team two-shift work type in the exemplary embodiment of the system for creating employment through the work type established by collective intelligence convergence of the present invention.

The collective intelligence converging system 200 receiving the request for the collective intelligence opinion from the operating computer 100 derives background knowledge illustrated in FIG. 9 based on an expert's opinion with the employment expansion rate opinion convergence according to the introduction of the four-team two-shift work type as an agenda and presents the derived background knowledge to the participants who are presenters of the collective intelligence opinion. The background knowledge in the case of approving the employment expansion may include, for example, continuous improvement of sales in the last three years, an increase in net profit by 50% in the last year, and contribution to resolving personal stagnation. The background knowledge in the case of disapproving the employment expansion may include, for example, a continuous consumption decline trend, a disadvantageous export-related external environment, and downturn of overall sales of the same type of industry.

In addition to the background knowledge of the above example, in order to secure the result of the collective intelligence as a numerical value, a numerical value range that may be presented by the participant for the opinion collection item may be set. For example, in the case of approving the employment expansion, the numerical value of the employment expansion rate may be set to 1% to 100%, and in the case of disapproving the employment expansion (employment reduction), the numerical value of the employment expansion rate may be set to -50% to -1%.

The numerical value range is one example, and the present invention is not limited thereto.

In the example of FIG. 9, if the first decimal place is rounded in the average value of the agreement opinions, a convergence value of the employment expansion rate of the collective intelligence converging system is represented as about 16%.

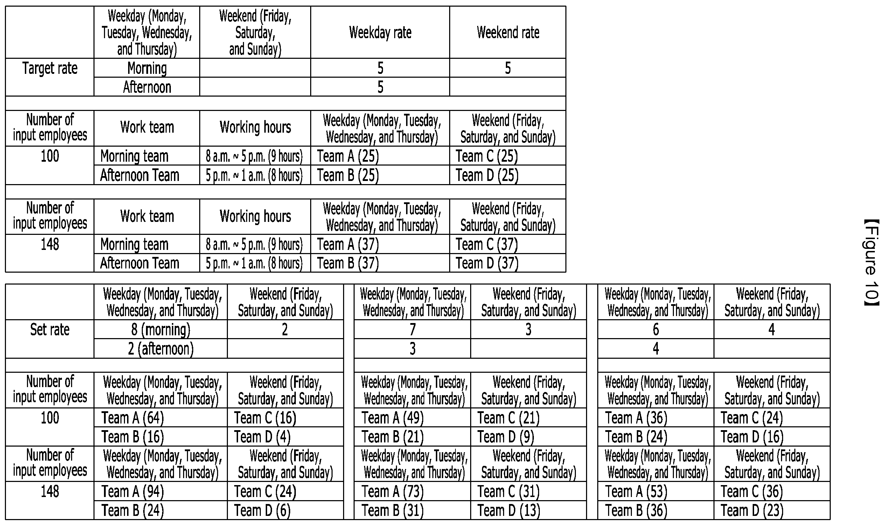

FIG. 10 is a diagram illustrating an example for describing an operation of setting a ratio of number of people input by group of the four-team two-shift work type of the company.

As illustrated in FIG. 10, a final target ratio in the exemplary embodiment of the present invention is to set the ratio of the morning team and the afternoon team to 5:5 and the ratio of the weekday team and the weekend team to 5:5, but it is irrational to arbitrarily set the final target ratio by a system manager. Accordingly, it is important to set the ratio step by step and collect and apply the converged opinion of the collective intelligence converging system.

In the case where the ratio of the morning team and the afternoon team is set to 8:2 and the ratio of the weekday team and the weekend team is to 8:2, and the total number of employees input is 100, the employees assigned for Teams A, B, C, and D are set to 64, 16, 16, and 4, respectively. Further, when the target for the total number of employees is 148, the employees assigned for Teams A, B, C, and D are set to 94, 24, 24, and 6, respectively.

Further, in the case where the ratio of the morning team and the afternoon team is set to 7:3 and the ratio of the weekday team and the weekend team is to 7:3, and the total number of employees input is 100, the employees assigned for Teams A, B, C, and D are set to 49, 21, 21, and 9, respectively. Further, when the target for the total number of employees is 148, the employees assigned for Teams A, B, C, and D are set to 73, 31, 31, and 13, respectively.

Further, in the case where the ratio of the morning team and the afternoon team is set to 6:4 and the ratio of the weekday team and the weekend team is to 6:4, and the total number of employees input is 100, the employees assigned for Teams A, B, C, and D are set to 36, 24, 24, and 16, respectively. Further, when the target for the total number of employees is 148, the employees assigned for Teams A, B, C, and D are set to 53, 36, 36, and 23, respectively.

Further, in the case where the ratio of the morning team and the afternoon team is set to 5:5 and the ratio of the weekday team and the weekend team is to 5:5 that is the final target, and the total number of employees input is 100, the employees assigned for Teams A, B, C, and D are set to 25, 25, 25, and 25, respectively. Further, when the target for the total number of employees is 148, the employees assigned for Teams A, B, C, and D are set to 37, 37, 37, and 37, respectively.

As described above, since the ratio of the employees of Team A (weekday and morning team) is high and the ratio of the employees of the weekend team is low at the beginning of the introduction of the four-team two-shift work type, it is a goal to ultimately organize the ratio of each group to be equal while gradually lowering the ratio of employees of Team A.

As described above, despite the setting of the number of employees input for each team in the four-team two-shift work type, the core of the present invention is to converge the collective intelligence and apply the setting process according to the collective intelligence.

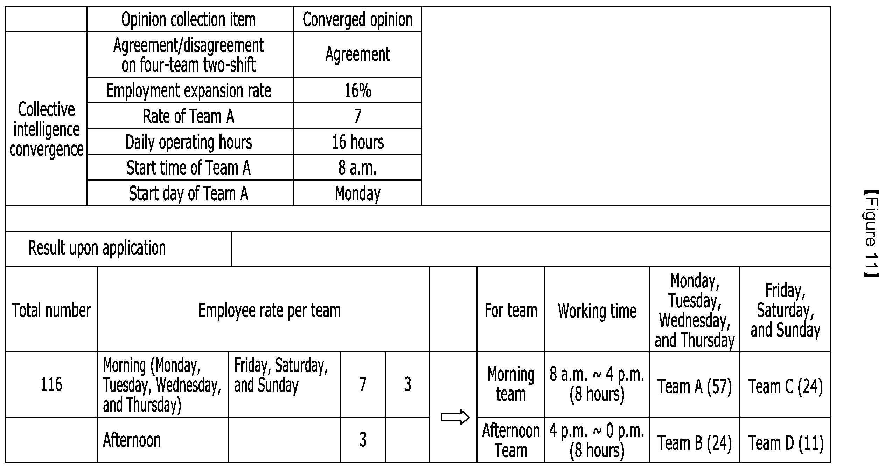

FIG. 11 is a diagram illustrating an example for describing an employment expansion according to the result of the application of opinion convergence of the collective intelligence converging system in the four-team two-shift work type of the present invention.

The introduction of the four-team two-shift work type and the result of the convergence of the collective intelligence for the employment expansion by the introduction of the four-team two-shift work type have been described with reference to FIGS. 6 and 7.

As illustrated in FIG. 11, the result of the collective intelligence convergence on the items of collected opinions on the basis of the four-team two-shift work type and the total number of employees of 100 was shown as "agreement" for the introduction of the four-team two-shift work type, the employment expansion ratio of 16%, the ratio of employees of Team A (weekday and morning team) of "7", a daily operation time of "16 hours", the work start time of Team A of "8 o'clock", and the work start day of Team A of "Monday".

When the result of the collective intelligence convergence is applied to the four-team two-shift work type based on 100 employees of the company, the employment expansion rate is 16%, so that the total number of employees is 116 to create employment for 16, and since the ratio of employees of Team A (weekday and morning team) in the ratio of employees for each team is 7, the ratio of employees for the weekday morning team and the weekday afternoon team is set to 7:3 and the ratio of employees for the weekday morning team and the weekend morning team is set to 7:3.

Accordingly, in the assignment of the employees for each team of the four-team two-shift work type to which the result of the collective intelligence convergence is applied, the working times of the morning team is set to 8 a.m. to 4 p.m. (8 hours), the working time of the afternoon team is set to 4 p.m. to 12 p.m. (8 hours), and the assignment of employees for Teams A, B, C, and D is set to 57, 24, 24, and 11.

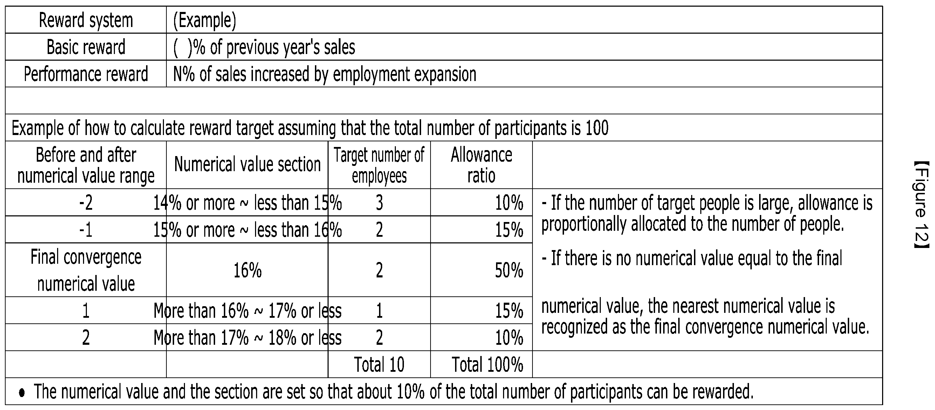

FIG. 12 is a diagram illustrating an example for describing a reward system for a participant contributing to determining a final numerical value of the employment expansion ratio according to the result of the application of opinion convergence of the collective intelligence converging system in the four-team two-shift work type of the present invention.

FIG. 12 is the system in which for the participant participating in determining the employment expansion rate by the collective intelligence converging system in the four-team two-shift work type, the participants guessing the final numerical value (in the above example, the final convergence value of the employment expansion rate of 16%) to be converged as the collective intelligence are compensated.

The reward system is divided into basic reward and performance reward, and in the basic reward, for example, a predetermined ratio (%) of amount of sales from the previous year may be set as the reward amount. Further, in the performance reward, for example, a predetermined ratio (%) of amount of sales increased due to the employment expansion may be set as the reward amount.

As illustrated in FIG. 12, in the example, when the number of participants guessing the final convergence numerical value of 16% is 2, the number of participants guessing the numerical value belonging to the numerical values section of 15% or more to less than 16% that is the previous numerical value section of the final convergence numerical value of 16% is 2, the number of participants guessing the numerical value belonging to the numerical value section of 14% or more to less than 15% is 3, the number of participants guessing the numerical value belonging to the numerical value section of more than 16% to 17% or less that is the numerical value section just after the final convergence numerical value of 16% is 1, and the number of participants guessing the numerical value belonging to the numerical values of more than 17% to 18% or less is 2, for example, 50% of the reward may be distributed to 2 participants guessing the final convergence numerical value of 16%, 15% of the reward may be distributed to 2 participants guessing the convergence numerical value belonging to the numerical value section of 15% or more to less than 16%, 10% of the reward may be distributed to 3 participants guessing the convergence numerical value belonging to the numerical value section of 14% or more to less than 15%, 15% of the reward may be distributed to 1 participant guessing the convergence numerical value belonging to the numerical value section of more than 16% to 17% or less, and 10% of the reward may be distributed to 2 participants guessing the convergence numerical value belonging to the numerical value section of more than 17% to 18% or less.

Further, when there is no same numerical value as the final convergence numerical value, the closest numerical value is recognized as the final convergence numerical value and the reward may be distributed.

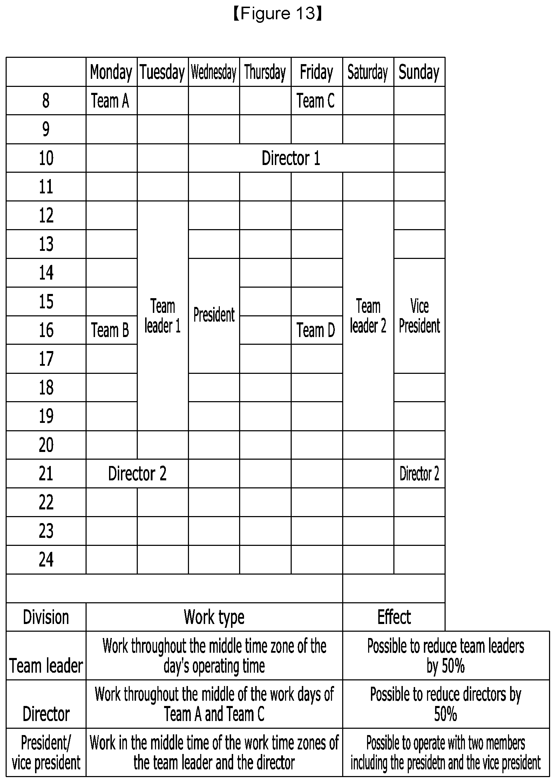

FIG. 13 is a diagram illustrating an example for describing adjustment of a work type of a manager among the means for supplementing problems generated in a company when the employment is expanded according to a result of the opinion convergence of the collective intelligence converging system in the four-team two-shift work type.

Factors that need to be supplemented may include, for example, an excessive manager position, increased costs due to additional employees, and unreasonable cost. In order to supplement the factors, the work type of the manager position is changed, the additionally hired workers are temporarily employed as non-regular workers (until increase in sales (net profit) and the wages of additionally hired workers are linked to the increase in a sales increase rate (net profit), and the unreasonable cost (for example, the excessive wage level compared to the competitive company) may be compensated with the numerical value determining system.

As illustrated in FIG. 13, in the four-team two-shift work type, when it is assumed that the managers are a team leader, a managing director, and a president/vice president, the work type of the team leader is set to work over the middle of the day's operating hours, so that the number of members of the team leader position may be reduced by 50%. Further, the work type of the managing director is set to work over the middle of the days of Team A to Team C, so that the number of members of the managing director position may be reduced by 50%, and the work type of the president/vice president is set to work in the middle of the working hours of the team leader and the managing director, so that the company may be operated with only two members of the president and the vice president.

Due to the introduction and optimization of the four-team two-shift work type, the labor cost burden is large for managers, such as team leaders and department heads and senior executives, according to the employment expansion, so that the work type is the configuration for utilizing existing employees or minimizing additional demands without new employment of the manager-level personnel and executive-level personnel by disposing the work of the manager-level personnel and the executive-level personnel in the company operating two or more work shift teams in the middle hours (days) of the working hours of the two teams.

Further, as the supplement means of the increase in company costs which may occur when attempting to create employment by adopting the four-team two-shift work type, in addition to the employment type and the wage determination type, it is possible to increase operating profit company by reducing material cost through mass purchase of production materials according to the improvement of productivity caused by employment expansion, it is possible to maintain the operating profit despite the increase in the cost due to the employment expansion through the creation of profits through the reduction of the rent, the rent of a remaining space, and the like by the reduction of the working space according to the decrease in working members in a specific time zone through the optimization of the four-team two-shift work type, and further, it is possible to increase the net profit through tax incentives that may be received for employment expansion without wage cuts.

Accordingly, it is possible to expand employment without wage cuts by adopting the four-team two-shift work type and optimizing the working team, the working hours, and the disposition of personnel.

Further, regarding the team organization in the case where the number of people input by group is different in the four-team two-shift work type of the present invention, in the modern company that is subdivided into a team/department unit, it is difficult to appear the case where there are more than 52 people per team, so that when it is assumed that the maximum number of people of the team/department is 52 (when the number of people of the team/department is more than 52, the team is divided into teams including 52 or less members to be applied) and the team of each one person is changed per week in an order, after a maximum of 1 year (52 weeks), the assignment of the people by team is one rotated to solve the team equity issue within one year.

Further, in the case where the four-team two-shift work with no distinction between weekdays and weekends is available due to the characteristic of the company in the four-team two-shift work type of the present invention (in the case where the workload is similar regardless of weekdays/weekends), the four-team two-shift work type may be operated in a manner in which each of the four teams works N days and takes N days off, and when the team changes the day work and the night work in the second week, it is possible to maintain the team equity, and it is possible to continuously maintain the team equity by repeating the work in the same pattern from the third week.

Depending on the company, it may be difficult to immediately adopt the four-team two-shift work type according to convenience. To this end, until an environment in which the company can adopt the four-team two-shift work type is established, the two-team two-shift work type may be adopted in a transitional period, but may be performed by optimizing the working team, the number of employees in each group, and working hours. Compared to the existing work type of working in entire weekdays (Monday, Tuesday, Wednesday, Thursday, and Friday) and being off in weekends (Saturday and Sunday), in the case of optimizing the number of input employees by using the two-team two-shift work type with the weekday team (Monday, Tuesday, Wednesday, and Thursday) and the weekend team (Friday, Saturday, and Sunday), the effect of securing working hours is greater by the improvement of work concentration, compared to the effect of reducing employees, resulting in an effect of improving productivity per person.

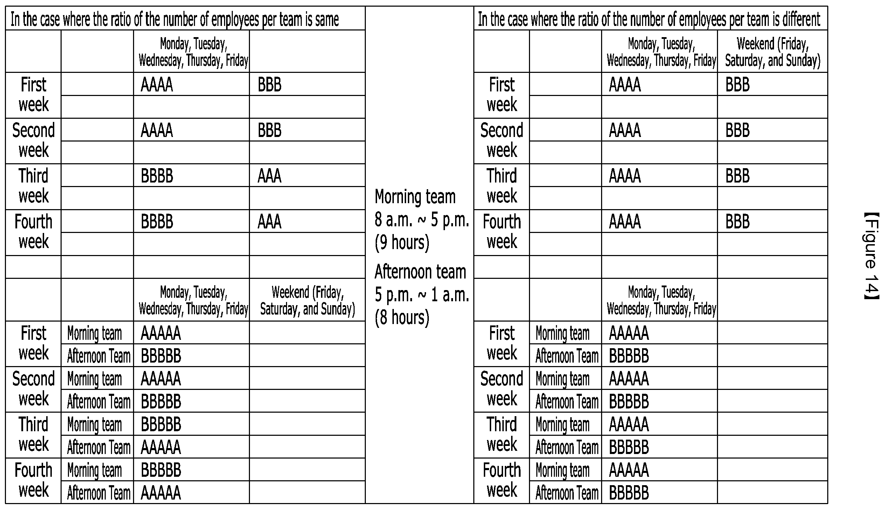

FIG. 14 is a diagram illustrating an example for describing an exemplary embodiment of the two-team two-shift work type in a transition period prior to the adoption of the four-team two-shift work type.

As illustrated in FIG. 14, in the two-team two-shift work type of the present invention, in relation to the employment disposition, in the case where the number of employees per team is the same, the weekday work team and the weekend work team, and the morning work team and the afternoon work team are set to shift and work, and in the case where the number of employees per team is different(for example, in the case where the demands for the weekday and morning team are large), the teams are fixed and the workers are rotated on a weekly basis to be assigned to each team, thereby achieving fair team assignment. That is, since the work of the company is made up of a team/department unit, in the case where the number of team/department members is N, it may be set so that all of the input employees are rotated by one after N weeks.

Further, the case where there is no distinction between the weekday work and the weekend work in the four-team two-shift work type, that is, the case where the amount of work is similar regardless of the days of the weekday and the weekend, corresponds to the two-team two-shift work type of the present invention. In this case, it is set for each of four teams to work N days and work off N days, and when the morning work team and the afternoon work team are shifted in the second week, it is possible to secure the team equity, and the same pattern is set to be repeatedly performed from the third week.

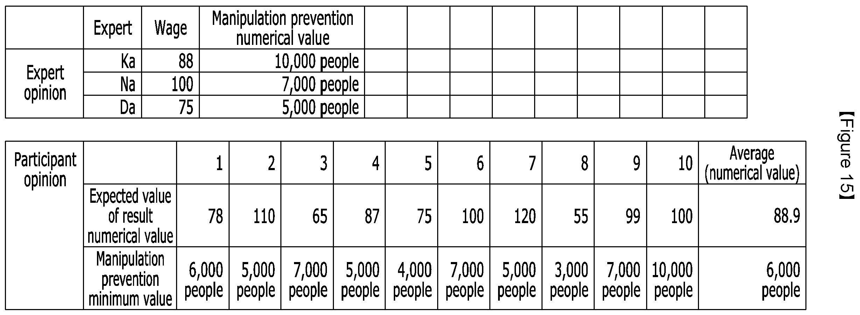

FIG. 15 is a diagram illustrating an example for describing the numerical value determining system as a supplementing means for preventing cost increase of a company when the employment is expanded through adoption and optimization of the four-team two-shift work type.

The numerical value determining system reevaluates and optimizes the unreasonable cost, such as wage levels, in the company adopting the four-team two-shift work type to be utilized for reducing cost burden of the company.

The numerical value determining system of the present invention may utilize the collective intelligence converging system, and the core of the numerical value determining system is to provide a predetermined reward to the participants participating in the collective intelligence convergence.

As illustrated in FIG. 15, the numerical value determining system of the present invention is the system of operating a reward system and converging the optimum numerical value in determining a specific numerical value, such as an employment expansion rate, and a principle thereof is as follows.

The basic principle of the numerical value determining system is to reward participants who guesses the final numerical value to be converged as the collective convergence, that is, the final convergence value of the employment expansion rate of 16% in the example, and the numerical value determining system is formed of basic reward (basic allocation amount) and performance reward (performance allocation amount). The participants read the background knowledge acknowledged as the most objective opinion and then presents their opinions by synthesizing all circumstances, so that the participant does not present the subjective numerical value that the participant thinks, but predicts (expects) the numerical values that the opinions of all participants will be converged as the collective intelligence and presents the opinion (numerical value) in consideration of the reward system, and thus the numerical value determining system is the configuration in which the objectivity and rationality of the converged numerical value are guaranteed. The basic reward is based on depositing a certain amount when a client requests work to the system manager, and the performance reward is autonomously set and voluntarily implemented by a client, and whether to achieve the performance and the like are checked by the system, so that the performance reward implementation rate and reliability of the client are managed by the system.

In the meantime, a manipulation preventing system in relation to the convergence of the collective intelligence opinion is additionally operated. That is, the manipulation preventing system is the configuration which makes the client set or input a minimum manipulation prevention value (the minimum number of participants whose manipulation may be neutralized) when the opinions of the client, the expert, and the participants are converged, when the corresponding value is reached, the result is delivered to the client, or when the client accepts the manipulation prevention value converged as the collective intelligence even before reaching the client's set value, the result is delivered to the client to achieve a predetermined goal.

As the general measure of the manipulation prevention, the manipulation preventing system may be operated by setting the limit of the reward, for example, when an artificial manipulation related to the opinion convergence is reported, the reward is twice as much as the amount received by the reporter, in the case of the specific agenda manipulation director, the reward for up to 10 reporters by order, the reward is a maximum of 1 million won per person, and a total amount of 10 million won per agenda.

It is preferable to set the numerical value and a section so that about 10% of the total participant may be rewarded in relation to the selection of the reward target in the numerical value determining system.

In the numerical value determining system, the first place may be one person or several people who guessed the finally converged value, and when there is no person guessing the finally converged value, one person or several people who present the nearest numerical value may be selected as the first place, the participants (for example, about 4% of the total participants) presenting the numerical value immediately before and after the first place numerical value may be selected as the second place, and the participants (for example, about 6% of the total participants) presenting the numerical value immediately before and after the second place numerical value may be selected as the third place. Further, in order for the first place to be selected within the range of a single digit considering the total number of participants, it is preferable to operate the system by setting the system so that the users of the system input the price up to the unit of WON, and the percentage up to the third to fourth decimal place.

When the participant for each rank is selected, the amount may be distributed by rank, the distributed amount per person may be calculated by dividing the allocated amount for each rank by the total number of people of each rank, and the system may automatically allocate the corresponding amount to the target person (which is identically applied to the distribution of performance allocation amount).

As illustrated in FIG. 15, in the numerical value determining system of the present invention, when the experts of the corresponding field present the plurality of minimum numerical values (the minimum number of people who need to participate in presenting the opinion) for preventing the manipulation of the opinion of the presented wage level as the background knowledge in the collective intelligence converging system for converging the opinion on the optimal wage (annual income) for introduction of the four-team two-shift work type, each of the participants presents the wage level and the minimum numerical value for manipulation prevention based on the background knowledge and the minimum numerical value for manipulation prevention. Average values of the presented wage levels and minimum manipulation prevention values of the participants (in the example, annual salary 88,900,000 won, minimum manipulation prevention numerical value of 6,000) are determined as a final convergence opinion.

In the numerical value determining system of the present invention, the reward system for providing the participants with the reward is indispensably incorporate in order to obtain a qualitative result of the final convergence opinion. The reward system consists of basic reward and performance reward.

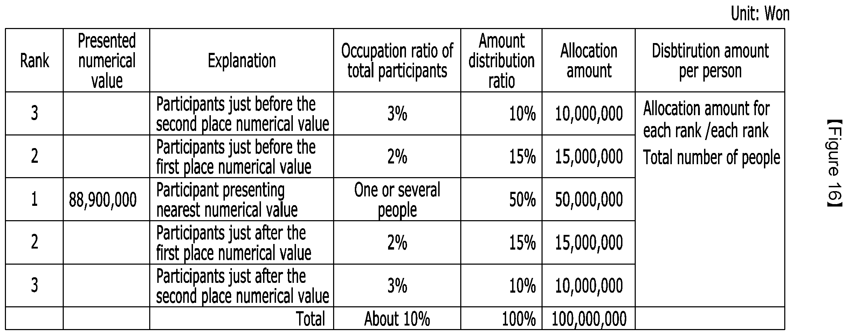

FIG. 16 is a diagram illustrating an example for describing an exemplary embodiment of the basic reward of the numerical value determining system of the present invention.

As illustrated in FIG. 16, 50% of the total reward is allocated to one participant or several participants who guess the wage level of 88,900,000 won converged or present the nearest value in the exemplary embodiment of FIG. 15 and the remaining reward is differentially allocated to the predetermined number of participants who present the numerical values that are close to the converged wage level, but are larger or smaller than the converged wage level.

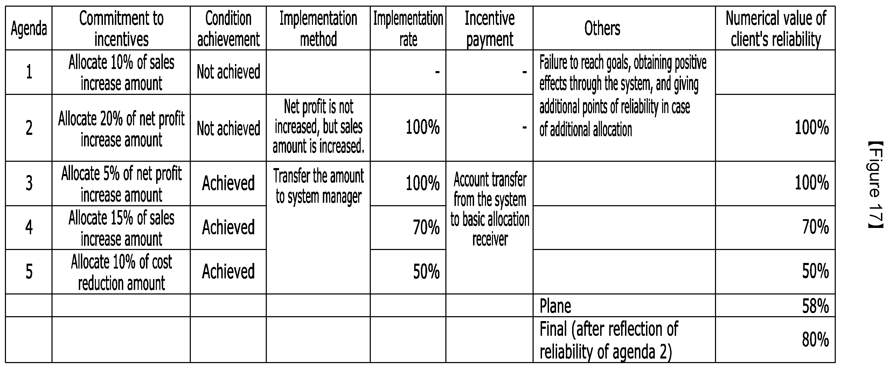

FIG. 17 is a diagram illustrating an example for describing an exemplary embodiment of the performance reward of the numerical value determining system of the present invention.

As illustrated in FIG. 17, the performance reward includes the constituent elements, such as the conditions for the allocation of incentives committed by the client, a checklist for achievement of allocation condition, an incentive allocation fulfillment method, a fulfillment rate, and execution of incentive payment, and may be configured so as to allocate performance reward by reflecting reliability of the client.

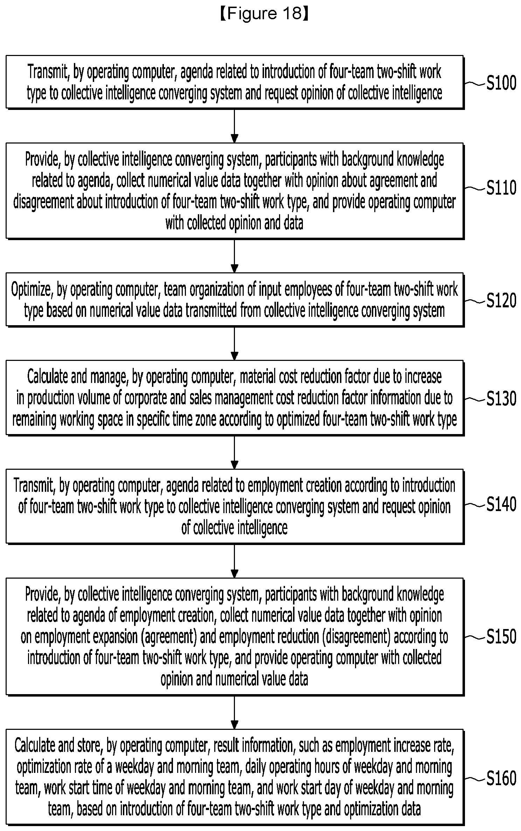

FIG. 18 is a flowchart illustrating an exemplary embodiment of a method of creating employment through a work type established by collective intelligence convergence of the present invention.

As illustrated in FIG. 18, a method of creating employment through a work type established by collective intelligence convergence of the present invention includes: transmitting, by an operating computer, an agenda related to introduction of a four-team two-shift work type to a collective intelligence converging system and requesting an opinion of collective intelligence (S100); providing, by the collective intelligence converging system, participants with background knowledge related to the agenda, collecting numerical value data together with opinion about agreement and disagreement about the introduction of the four-team two-shift work type, and providing the operating computer with the collected opinion and data (S110); optimizing, by the operating computer, a team organization of input employees of the four-team two-shift work type based on the numerical value data transmitted from the collective intelligence converging system (S120); calculating and managing, by the operating computer, information about a material cost reduction factor due to an increase in a production volume of a company and a sales management cost reduction factor due to a remaining working space in a specific time zone according to the optimized four-team two-shift work type (S130); transmitting, by the operating computer, an agenda related to employment creation according to the introduction of the four-team two-shift work type to the collective intelligence converging system and requesting an opinion of collective intelligence (S140); providing, by the collective intelligence converging system, the participants with background knowledge related to the agenda of the employment creation, collecting numerical value data together with an opinion on employment expansion (agreement) and employment reduction (disagreement) according to the introduction of the four-team two-shift work type, and providing the operating computer with the collected opinion and numerical value data (S150); and calculating and storing, by the operating computer, result information, such as an employment increase rate, an optimization rate of a weekday and morning team, daily operating hours of the weekday and morning team, a work start time of the weekday and morning team, and a work start day of the weekday and morning team, based on the introduction of the four-team two-shift work type and the optimization data (S160).

The foregoing exemplary embodiment of the present invention is merely a part of the various exemplary embodiments of the present invention. It is a matter of course that various exemplary embodiments included in the technical spirit deriving the finally optimized four-team two-shift work type and an employment expansion result by utilizing the collective intelligence converging system and the numerical value determining system in relation to the introduction of the four-team two-shift work type and the employment expansion of a company of the present invention are included in the scope of the present invention.

### [Description of Symbol]

100: operating computer
200: collective intelligence converging system
300: numerical value determining system
400: employment creation data storing unit
500: collective intelligence data storing unit
600: numerical value determination data storing unit

## Claims

1. A system for creating employment through a work type of a general office work established by collective intelligence convergence; the system comprising:
an operating computer which makes an adjustment for creating employment in relation to a four-team two-shift work type of a company;
a collective intelligence converging system which converges collective intelligence for an opinion collection item of introduction of the four-team two-shift work type and an opinion collection item of an employment expansion rate by a request of the operating computer, and provides the operating computer with a converged opinion and a numerical value related to the converged opinion; and
a numerical value determining system which reevaluates and adjusts unreasonable cost of the company by the request of the operating computer,
wherein the operating computer is operated to improve productivity of the company while increasing employment by increasing daily operating hours of the company compared to an existing work type through a work type that distributes workforce by operating the work in two shifts or a work type that distributes workforce into a weekday team (Monday, Tuesday, Wednesday, and Thursday) and a weekend team (Friday, Saturday, and Sunday) in the introduction of the four-team two-shift work type of the company.

2. A system for creating employment through a work type of a general office work established by collective intelligence convergence; the system comprising:
an operating computer which makes an adjustment for creating employment in relation to a four-team two-shift work type of a company;
a collective intelligence converging system which converges collective intelligence for an opinion collection item of introduction of the four-team two-shift work type and an opinion collection item of an employment expansion rate by a request of the operating computer, and provides the operating computer with a converged opinion and a numerical value related to the converged opinion; and
a numerical value determining system which reevaluates and adjusts unreasonable cost of the company by the request of the operating computer,
wherein the operating computer is operated to improve productivity of the company while increasing employment by increasing daily operating hours of the company compared to an existing work type through a work type that distributes workforce by operating the work in two shifts or a work type that distributes workforce into a weekday team (Monday, Tuesday, Wednesday, and Thursday) and a weekend team (Friday, Saturday, and Sunday) in the introduction of the four-team two-shift work type of the company, and
the operating computer adjusts the number of input employees of a work team most preferred by workers step by step in order to equally set the number of input employees in each group.

3. The system of claim 1 or claim 2, wherein:
the collective intelligence converging system converts whether the company introduces the four-team two-shift work type of the company, data for adjusting team organization when the four-team two-shift work type is introduced, an employment expansion rate through the adjustment of the four-team two-shift work type of the company, and numerical value determination and reward determination contents of the numerical value determining system into numerical values, and provides the numerical values to the operating computer and the numerical value determining system.

4. The system of claim 1 or claim 2, wherein:
in reevaluating the unreasonable cost of the company required in the process of adjusting by the operating computer which introduces and adjusts the four-team two-shift work type, the numerical value determining system provides the collective intelligence converging system with an agenda and provides the operating computer with adjusted cost information of the company provided by converging opinions of the participants based on related background knowledge by the collective intelligence converging system.

5. The system of claim 1 or claim 2, wherein:
the operating computer includes:
an opinion convergence information managing unit which sets an opinion collection item related to the four-team two-shift work type and manages the converged opinion by using the collective intelligence converging system;
a team organization information managing unit which sets a ratio of morning and afternoon teams and a ratio of weekday and weekend teams of the employees of the four-team two-shift work type, and adjusts the ratio of the weekday and morning team step by step in consideration of the fact that a ratio of a weekday and morning team is high and a ratio of a weekend team is low at the beginning of the introduction;
a transitional period information managing unit which sets and manages the number of input employees in a two-team two-shift work type in a transitional period in consideration of a company's situation where it is difficult to immediately introduce the initial four-team two-shift work type although the necessity of shift work is recognized;
a company cost information managing unit which manages cost information of the company reduced when factors, such as an increase in a production volume and a remaining work space, occur due to the introduction of the four-team two-shift work type;
an employment creation information managing unit which manages an employment expansion rate and the like including employee information, which is increased by optimizing the four-team two-shift work type by using the collective intelligence converging system, by using the numerical value determining system; and
a result analysis information managing unit which analyzes and manages a result of the employment creation and company's cost reduction occurring when the four-team two-shift work type is optimized by using the collective intelligence converging system.

6. The system of claim 1 or claim 2, wherein:
the numerical value determining system includes:
an opinion convergence information managing unit which receives numerical value determination agenda data related to the employment expansion rate from the operating computer, makes a request for opinion convergence to the collective intelligence converging system, and manages a result of the request;
a manipulation prevention information managing unit which includes minimum manipulation prevention value information included in the numerical value determination agenda data received from the operating computer or autonomously determined minimum manipulation prevention value information in the request of the opinion convergence to the collective intelligence converging system;
a basic reward information managing unit which performs a predetermined reward on a participant who guesses a final numerical value based on the converged opinion in the collective intelligence converging system and manages the reward;
a performance reward information managing unit which performs a performance reward performed by the operating computer and manages a performance reward implementation rate and reliability of a client;
an allocation information managing unit which allocates a reward amount by each rank to selected participants, in which the participants presenting numerical values having a predetermined range of differences from the final numerical value of the opinion convergence of the collective intelligence converging system;
a result information managing unit which provides the operating computer with the finally determined numerical value.

7. A system for extracting employment expansion information in a four-team two-shift work type of a general office work of a company including an operating computer and a collective intelligence converging system connected to the operating computer through communication, wherein
the collective intelligence converging system converges collective intelligence for whether a specific four-team two-shift work type is introduced, a ratio of a weekday and morning team (Team A) among four teams, daily operating hours, a work start time and a start day of Team A, an allocation rate for an increase portion and an employment expansion rate when a net profit is increased, which are requested by the operating computer, and provides the operating computer with convergence opinion including specific numerical values.

8. The system of claim 7, wherein:
as a supplement means for cost increase burden of a company when the company executes employment expansion according to the employment expansion rate converged in the collective intelligence converging system,
the operating computer sets work of people of a manager position and people of an executive position of the company to be disposed in a middle time (or date) of working hours of two teams, to reduce cost burden of the company without new employment of a person in the manager position or a person in the executive position.

9. The system of any one of claims 1, 2, and 7, wherein:
the operating computer adopts a two-team two-shift work type in a transitional period when the company is difficult to adopt the four-team two-shift work type, and adjusts the number of input employees in a work team of the two-team two-shift work type.

10. The system of claim 1 or 7, wherein:
the operating computer adjusts the number of input employees of a work team most preferred by workers step by step in order to equally set the number of input employees in each group.

11. A method of creating employment through a work type of a general office work established by collective intelligence convergence, the method comprising:
transmitting, by an operating computer, an agenda related to introduction of a four-team two-shift work type to a collective intelligence converging system and requesting an opinion of collective intelligence;
providing, by the collective intelligence converging system, participants with background knowledge related to the agenda, collecting numerical value data together with opinion about agreement and disagreement about the introduction of the four-team two-shift work type, and providing the operating computer with the collected opinion and data;
optimizing, by the operating computer, a team organization of input employees of the four-team two-shift work type based on the numerical value data transmitted from the collective intelligence converging system;
calculating and managing, by the operating computer, information about a material cost reduction factor due to an increase in a production volume of a company and a sales management cost reduction factor due to a remaining working space in a specific time zone according to the adjusted four-team two-shift work type;
transmitting, by the operating computer, an agenda related to employment expansion according to the introduction of the four-team two-shift work type to the collective intelligence converging system and requesting an opinion of collective intelligence;
providing, by the collective intelligence converging system, the participants with background knowledge related to the agenda of the employment expansion, collecting numerical value data together with an opinion on employment expansion (agreement) and employment reduction (disagreement) according to the introduction of the four-team two-shift work type, and providing the operating computer with the collected opinion and numerical value data; and
calculating and storing, by the operating computer, result information of an employment increase rate, an adjusted rate of a weekday and morning team, daily operating hours of the weekday and morning team, a work start time of the weekday and morning team, and a work start day of the weekday and morning team, based on the introduction of the four-team two-shift work type and the adjusted data.
